# EUROPÄISCHE PATENTSCHRIFT

(11) **EP 1 177 961 B1**
(45) Veröffentlichungstag und Bekanntmachung des Hinweises auf die Patenterteilung: **16.06.2010**
(21) Anmeldenummer: 01118351.4
(22) Anmeldetag: 27.07.2001
(51) Int. Cl.: B61D 27/00, B60H 1/00

(54) **Klimatisierungssystem für Fahrzeuge, vorzugsweise schienengebundene Fahrzeuge**
Air conditioning system for vehicles, especially for rail mounted vehicles
Système de conditionnement d'air pour véhicules, notamment pour véhicules sur rails

(30) Priorität: 01.08.2000 DE 10037467
(43) Veröffentlichungstag der Anmeldung: 06.02.2002
(73) Patentinhaber: Liebherr-Aerospace Lindenberg GmbH, 88161 Lindenberg/Allgäu (DE)
(72) Erfinder: Andrä, Robert, 88161 Lindenberg (DE); Sauter-Funk, Frank, 88175 Schneidegg (DE); Dorkel, André, 88161 Lindenberg (DE)
(74) Vertreter: Laufhütte, Dieter

(56) Entgegenhaltungen:
- EP-A- 0 544 474
- DE-A- 2 636 074
- DE-C- 4 308 630
- US-A- 6 041 615

## Beschreibung

Die Erfindung betrifft ein Klimatisierungssystem für Fahrzeuge, vorzugsweise schienengebundene Fahrzeuge nach dem Oberbegriff des Anspruchs 1.

Neben den bei Schienenfahrzeugen üblicherweise verwendeten Kaltdampfklimaanlagen wird bereits im ICE 3 Luft als Kältemittel in Klimaanlagen eingesetzt. Die luftgestützte Klimaanlage für Fahrzeuge wurde auf Basis bewährter Systemerfahrung aus der Luftfahrt entwickelt . Unter Umweltgesichtspunkten bringt der Einsatz von Luft als Kältemittel in Klimaanlagen große Vorteile. Bezüglich der benötigten elektrischen Energie zur Erzeugung der Kälteleistung bestehen allerdings auch Nachteile gegenüber den herkömmlichen, sich am Markt befindlichen Kaltdampfklimaanlagen. Während die Kaltdampfklimaanlagen die im Phasenwechsel des Kältemittels enthaltenen energetischen Anteile nutzen können und damit wesentlich höhere Wirkungsgrade erreichen, entfällt dies bei der Verwendung von Luft als Kältemittel. Ein vorbekanntes Klimatisierungssystem, das bei schienengebundenen Fahrzeugen bereits eingesetzt wird, weist einen eine Heizung enthaltenden Zufluftkreislauf und einen Kühlkreislauf auf, die über einen Luft-Luft-Wärmetauscher gekoppelt sind. Im Kühlkreislauf wird Prozessluft in einer Entspannungsturbine expandiert und diese Prozessluft wird nach Durchströmen des Wärmetauschers zum Kühlen der Zuluft von einem Verdichter angesaugt, verdichtet und in die Umgebung abgegeben.

Aufgabe der Erfindung ist es, die Leistungswerte des gattungsgemäßen luftgestützten Klimatisierungssystems zu verbessern, um die Wettbewerbsfähigkeit gegenüber der Kaltdampfklimaanlage auch unter energetischen Gesichtspunkten zu verbessern.

Erfindungsgemäß wird diese Aufgabe bei einem gattungsgemäßen Klimatisierungssystem durch die Kombination der Merkmale gemäß Anspruch 1 gelöst. Gerade der "offene Unterdruckprozess" bietet eine hervorragende Möglichkeit, die in der Fortluft enthaltene und im klimatisierten Fahrzeuginnenraum in der Regel in die Umgebung abgeblasene und damit vergeudete Energie ohne großen technischen Mehraufwand zu nutzen. Erfindungsgemäß wird die abgeführte Fortluft im Kühlbetrieb zumindest teilweise über die Entspannungsturbine geführt, während sie im Heizbetrieb zur Vorwärmung unmittelbar dem Wärmetauscher zuführbar ist.

Erfindungsgemäß wird die Fortluft somit regenerativ einerseits für den Kühlbetrieb und andererseits für den Heizbetrieb genutzt. Führt man nämlich die Fortluft unmittelbar der von der Entspannungsturbine angesaugten Prozessluft zu, so wird sich die Temperatur der so entstehenden Mischluft, bestehend aus Außenluft und Fortluft reduzieren. Dies bringt speziell im Kühlfall Vorteile, da die notwendige Arbeit des Kompressors zur Erzeugung des geforderten Druckgefälles an der Turbine zur Entspannung und damit Abkühlung der Prozessluft vermindert wird. Die Einsparungen äußern sich sowohl in einem verminderten maximalen elektrischen Anschlusswert für den Umrichter des Elektromotors als auch in einem reduzierten Jahresenergieverbrauch. Hinsichtlich der regenerativen Nutzung der Fortluft im Heizbetrieb macht sich die Erfindung zunutze, daß der Luft-Luft-Wärmetauscher für den Heizbetrieb im Winter nicht benötigt wird. Der Kühlkreislauf ist im Winter nicht in Betrieb. Somit steht der Nutzung des Luft-Luft-Wärmetauschers zur Vorwärmung der Außenluft durch die entweichende warme Fortluft des Wagens im Winterbetrieb nichts im Wege. Dies eröffnet die Möglichkeit, diesen Wärmetauscher zur Wärmerückgewinnung der in der Fortluft enthaltenen Energie im Heizbetrieb zu nutzen.

Vorteilhafte Ausgestaltungen der Erfindung ergeben sich aus den sich an den Hauptanspruch anschließenden Unteransprüchen. Demnach kann je mindestens ein Ventilator zur Zuluftzuführung und/oder Fortluftzuführung vorgesehen sein.

Der Verdichter und die Entspannungsturbine können zusammen mit einem Motor auf einer Welle angeordnet sein. Diese Baueinheit bildet die sogenannte aircycle-Maschine.

Zur weiteren Verbesserung der Energiebilanz kann der frisch angesaugten Zuluft zu einem vorbestimmten Prozentsatz aus dem Fahrzeuginnenraum zurückgeführte Umluft zugemischt werden.

Die Motordrehzahl des die Entspannungsturbine antreibenden Motors ist einstellbar. Über die Einstellung der Motordrehzahl kann die Kälteleistung stufenlos zwischen 0 und 100% eingestell werden.

Auf der Zuluftseite im Wärmetauscher kondensierte Feuchte kann gemäß einer weiteren vorteilhaften Ausgestaltung der Erfindung direkt in den Unterdruckkreis eingespritzt werden, so daß die bei der Kondensierung dieses Wassers gewonnene Energie wieder in Kälteleistung umgesetzt werden kann.

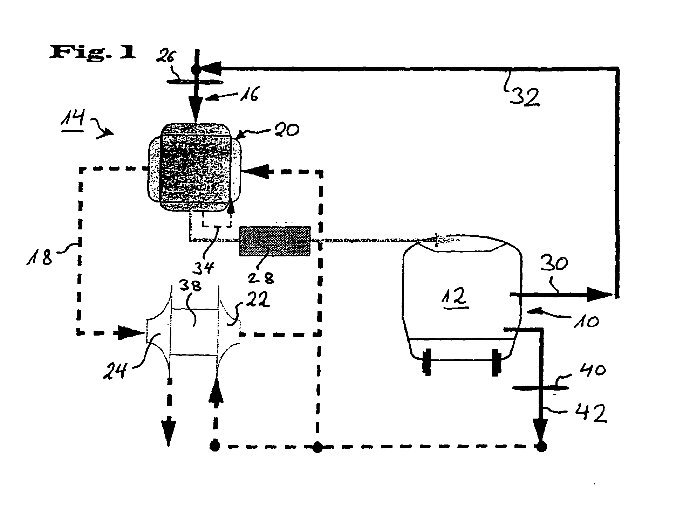

Weitere Einzelheiten und Vorteile der Erfindung werden anhand eines in der Zeichnung dargestellten Ausführungsbeispiel näher erläutert. Fig. 1 zeigt das Funktionsprinzip einer luftgestützen Klimatisierung am Beispiel eines Schienenfahrzeuges.

In Fig. 1 ist schematisch ein Schienenfahrzeug dargestellt, dessen Fahrzeuginnenraum 12 über ein luftgestütztes Klimatisierungssystem 14 klimatisert werden soll.

Das Klimatisierungssystem 14 ist hier schematisch dargestellt. Die Klimaanlage kann in einem kompakten Gehäuse untergebracht werden und beispielsweise als Klimamodul im Deckenbereich des Schienenfahrzeugs 10 oder unterflur angeordnet werden.

Das Klimatisierungssystem folgt dem Funktionsprinzip des sogenannten "offenen Unterdruckprozesses". Bei diesem Prinzip ist ein Zufluftkreislauf 16 mit einem Kühlkreislauf 18 über einen Luft-Luft-Wärmetauscher 20 gekoppelt. Im Kühlkreislauf wird zumindest teilweise aus der Umgebung stammende Luft über eine Entspannungsturbine 22 expandiert und je nach Kühlanforderung stufenlos bis auf Temperaturen um 0°C abgekühlt. Im Wärmetauscher 20 wird dem Prozess aus dem Zuluftkreislauf abgegebene Wärme zugeführt. Die bei niederem Druck erwärmte Luft wird über einen Verdichter 24 angesaugt, verdichtet und nach außen an die Umgebung wieder abgegeben.

Die Zuluft wird über mindestens einen Ventilator 26 aus der Umgebung angesaugt und über den Wärmetauscher 20 geführt und anschließend dem Fahrgastraum ggf. über hier nicht näher dargestellte Lüfter zugeführt. Für den Heizbetrieb ist im Zuluftkreislauf eine Heizung 28 angeordnet.

Zur Verringerung des Energieverbrauchs wird der Zuluft entsprechend der spezifischen Vorschriften und Spezifikationen Umluft beigemischt. Dies ist in Fig. 1 durch die Pfeile 30 und 32 verdeutlicht.

Eine weitere Energieersparnis während des Kühlens ergibt sich dadurch, daß das auf der Zuluftseite kondensierte Wasser direkt in den Unterdruckkreis des Kühlkreislaufs 18 eingespritzt wird (vgl. Bezugsziffer 34).

Die Entspannungsturbine 22 und der Verdichter 24 sind zusammen mit einem Motor 38 auf einer Welle angeordnet und bilden die motorisierte aircycle-Maschine. Die gemeinsame Welle von Motor, Turbine und Kompressor ist in hier nicht näher dargestellter Art und Weise in Magnetlagern gelagert. Die Magnetlagertechnologie zeichnet sich durch eine verschleiß- und wartungsfreie Lagerung der Welle aus.

Der Unterdruckprozess bietet eine einfache Möglichkeit, den Energiegehalt der Fortluft sowohl für den Kühl- als auch für den Heizbetrieb zu nutzen.

Führt man die über einen Ventilator 40 aus dem Fahrgastinnenraum 12 abgezogene Fortluft 42 unmittelbar der angesaugten Prozessluft im Kühlkreislauf zu, so wird sich die Temperatur der so entstehenden Mischluft, bestehend aus Außenluft und Fortluft reduzieren. Dies bringt speziell im Kühlfall Vorteile, da die notwendige Arbeit des Verdichters 24 zur Erzeugung des geforderten Druckgefälles an der Entspannungturbine 22 zur Entspannung und damit Abkühlung der Prozessluft vermindert wird.

Die Einsparungen äußern sich sowohl in einem verminderten maximalen elektrischen Anschlußwert für den Umrichter des Motors als auch in einem reduzierten Jahresenergieverbrauch.

Im Heizbetrieb wird im Zuluftkreislauf 16 der Luft-Luft-Wärmetauscher üblicherweise nicht benötigt, da der Kühlkreislauf im Winter nicht in Betrieb ist. Der Wärmetauscher 20 wird daher zur Vorwärmung der Außenluft durch die entweichende warme Fortluft 42 des Fahrzeuginnenraums 12 genutzt.

Das eröffnet die Möglichkeit, diesen Wärmetauscher 20 zur Wärmerückgewinnung der in der Fortluft enthaltenen Energie im Heizbetrieb zu nutzen. Die Wagentemperaturen betragen im Winterbetrieb ca. 20 bis 22°C. Abhängig von der herrschenden Außentemperatur die gemäß Spezifikation bis minus 20°C betragen kann und exakt der Menge der Fortluft entspricht, läßt sich so ein nicht unerheblicher Anteil der Wärmeenergie zurückgewinnen. Für die im Klimagerät intergrierte Heizung heißt dies, daß sie geringer dimensioniert werden kann. Das Verfahren reduziert zusätzlich den benötigten Jahresenergieverbrauch für die Klimatisierung.

## Patentansprüche

1. Klimatisierungssystem (14) für Fahrzeuge, vorzugsweise schienengebundene Fahrzeuge (10), mit einem eine Heizung (28) enthaltenden Zuluftkreislauf (16) und einem Kühlkreislauf (18), die über einen Luft-Luft-Wärmetauscher (20) gekoppelt sind, wobei im Kühlkreislauf Prozessluft in einer Entspannungsturbine (22) expandiert wird und wobei diese Prozessluft nach Durchströmen des Wärmetauschers (20) zum Kühlen der Zuluft von einem Verdichter (24) angesaugt, verdichtet und in die Umgebung abgegeben wird,
**dadurch gekennzeichnet,**
**daß** die aus dem klimatisierten Fahrzeuginnenraum (12) abgeführte Fortluft im Kühlbetrieb zumindest teilweise über die Entspannungsturbine (22) führbar ist und daß sie im Heizbetrieb zur Vorwärmung unmittelbar dem Wärmetauscher (20) zuführbar ist.

2. Klimatisierungssystem nach Anspruch 1, **dadurch gekennzeichnet, daß** je mindestens ein Ventilator (26, 40) zur Zuluftzuführung und/oder Fortluftabführung vorgesehen sein kann.

3. Klimatisierungssystem nach Anspruch 1 oder Anspruch 2, **dadurch gekennzeichnet, daß** der Verdichter (24) und die Entspannungsturbine (22) zusammen mit einem Motor auf einer Welle angeordnet sind.

4. Klimatisierungssystem nach einem der Ansprüche 1 bis 3, **dadurch gekennzeichnet, daß** Umluft aus dem Fahrgastinnenraum(12) zu einem vorherbestimmten Teil dem Zuluftkreislauf zuführbar ist.

5. Klimatisierungssystem nach einem der Ansprüche 1 bis 4, **dadurch gekennzeichnet, daß** die Drehzahl des Motors zum Antrieb der Entspannungsturbine (22) einstellbar ist.

## Claims

1. An air-conditioning system (14) for vehicles, preferably rail-mounted vehicles (10), having a incoming air circuit (15) containing a heating (28) and a cooling circuit (18) which are coupled via an air-to-air heat exchanger (20), wherein process air is expanded in an expansion turbine (22) in the cooling circuit and wherein this process air is sucked in by a compressor (24), compressed and discharged into the environment after flowing through the heat exchanger (20) for the cooling of the incoming air,
**characterised in that**
the outgoing air led out of the air-conditioned vehicle interior (12) can be guided at least partially over the expansion turbine (22); and **in that** it can be supplied directly to the heat exchanger (20) in heating operation.

2. An air-conditioning system in accordance with claim 1, **characterised in that** at least one respective fan (26, 40) can be provided for the incoming air supply and/or for the outgoing air removal.

3. An air-conditioning system in accordance with either of claims 1 or 2, **characterised in that** the compressor (24) and the expansion turbine (22) are arranged on a shaft together with a motor.

4. An air-conditioning system in accordance with one of the claims 1 to 3, **characterised in that** circulating air can be supplied in a predetermined portion from the passenger compartment (12) to the incoming air circuit.

5. An air-conditioning system in accordance with one of the claims 1 to 4, **characterised in that** the speed of the motor can be set for the driving of the expansion turbine (22).

## Revendications

1. Système de climatisation (14) pour véhicules, de préférence des véhicules sur rails (10), doté d'un circuit d'air frais (16) comprenant un chauffage (28) et d'un circuit de refroidissement (18), qui sont couplés par l'intermédiaire d'un échangeur thermique air-air (20), de l'air de processus étant développé dans une turbine de détente (22) dans le circuit de refroidissement et cet air de processus étant aspiré par un compresseur (24), comprimé et dégagé dans l'environnement, après être passé à travers l'échangeur thermique (20) pour refroidir l'air frais,
**caractérisé en ce que**
l'air d'échappement évacué hors de l'habitacle climatisé du véhicule (12) est conductible au mode de refroidissement au moins partiellement par l'intermédiaire de la turbine de détente (22) et **en ce qu'**il est introductible directement dans l'échangeur thermique (20) au mode de chauffage pour le préchauffage.

2. Système de climatisation selon la revendication 1, **caractérisé en ce qu'**au moins un ventilateur (26, 40) respectif peut être prévu pour l'alimentation d'air frais et/ou l'évacuation d'air d'échappement.

3. Système de climatisation selon la revendication 1 ou la revendication 2, **caractérisé en ce que** le compresseur (24) et la turbine de détente (22) sont disposés ensemble avec un moteur sur un arbre.

4. Système de climatisation selon une quelconque des revendications 1 à 3, **caractérisé en ce que** de l'air de circulation provenant de l'habitacle climatisé du véhicule (12) est introductible dans le circuit d'air frais vers une partie définie préalablement.

5. Système de climatisation selon une quelconque des revendications 1 à 4, **caractérisé en ce que** le régime du moteur est réglable pour l'entraînement de la turbine de détente (22).
